# EUROPEAN PATENT SPECIFICATION

(11) **EP 3 977 439 B1**
(45) Date of publication and mention of the grant of the patent: **25.11.2026**
(21) Application number: 20727826.8
(22) Date of filing: 29.05.2020
(51) Int. Cl.: G09G 5/14, G09G 5/36

(54) **MULTIMEDIA SYSTEM WITH OPTIMIZED PERFORMANCE**
MULTIMEDIASYSTEM MIT OPTIMIERTER LEISTUNG
SYSTÈME MULTIMÉDIA À PERFORMANCES OPTIMISÉES

(30) Priority: 31.05.2019 GB 201907710
(43) Date of publication of application: 06.04.2022
(73) Proprietor: AUMOVIO Germany GmbH, 60488 Frankfurt am Main (DE)
(72) Inventor: ONG, Soon Lee, Singapore 339780 (SG)
(74) Representative: Aumovio Corporation
(86) International application number: PCT/EP2020/064956
(87) International publication number: WO 2020/239972

(56) References cited:
- WO-A1-2014/040194
- WO-A1-2017/083477
- US-A1- 2006 248 404

## Description

### FIELD OF INVENTION

This invention generally relates to a vehicle multimedia system for use in a vehicle and specifically relates to optimizing performance of the vehicle multimedia system.

### BACKGROUND OF INVENTION

With the widespread usage of high definition displays for in-vehicle multimedia entertainment systems, the bandwidth of the bus to the memory of such systems becomes critical when considering performance. This is because the rendering of contents onto high definition displays requires high bandwidth when reading and writing to the memory. Particularly, concurrent use of applications requiring such high bandwidth of the memory bus typically leads to 100% bus load, resulting in slow system response which manifests in, e.g., slow execution of user input, drastic frame rate drop and lag in rendering to the display. Bus load is the percentage of the total bus traffic going through the bus and includes overheads from bus arbitration. Bus utilization is the percentage of the total bus traffic that is useful, i.e. data going through the bus that is useful, e.g. data going to the applications and not unneeded data that will be flushed. When a memory bus has high bus load percentage, e.g. 90% or more, the bus utilization may only be a fraction of the bus load percentage, e.g. less than 60% depending on the system. In other words, although the memory bus is busy, e.g. for 90% of the time, actual useful data or throughput going through the memory bus may only be less than 60%. Furthermore, as the system gets more complex, the number of bus masters increases, which increases bus load and decreases bus utilization further, e.g. further decrease of 30%. Therefore, it is imperative to decrease the load on the memory bus.

The US 2006 / 0 248 404 A1 shows a method for concurrently displaying a plurality of application windows on a display screen, the method comprising: responsive to a first command, rendering plural application windows in a scaled down form in a desktop space and rendering a first application window at or near full size in the desktop space, and responsive to a second command, rendering a second application window at or near full size in the desktop space, wherein none of the plural application windows overlap the first and second application windows.

The WO 2017 / 083 477 shows an in-vehicle computing system comprising: a display device; a user input interface; a processor; and a storage device storing instructions executable by the processor to: present, via the display device, a multi-view user interface including a plurality of application interfaces, each of the plurality of application interfaces displaying content for a different application simultaneously with one another, and each application interface filling at least one cell of a grid according to which presentation of the multi-view user interface is controlled; detect, via the user input interface, user input requesting a resize operation associated with the plurality of application interfaces, the user input indicating an updated location of at least one boundary of at least two of the plurality of application interfaces; and selectively adjust the size of each application interface of the plurality of application interfaces by snapping the at least one boundary of the at least two application interfaces to a nearest cell boundary of an associated cell of the grid.

The WO 2014 / 040 194 A1 shows a method for adjusting graphics rendering settings in a computer system, comprising: adjusting the graphics rendering settings of the system when an activity level on a bus meets a trigger condition; and returning the graphics rendering settings of the system to a previous level when the bus activity level drops below a threshold.

Much of the existing art focusses on optimizing network bandwidth so that content for a background application or lower priority application is received over the Internet at a limited rate or amount. However, optimizing the bandwidth required to obtain information over the Internet does not necessarily optimize bandwidth requirements on the memory bus. Particularly, after information is acquired from the Internet, the processes of such prior art systems may not optimally utilize the system's resources like memory and CPU load, and therefore may not optimize the load on the memory bus.

An existing way to reduce the load on the memory bus is to stop or pause an application if it is running in the background, so that the system can devote resources to the foreground application. However, time is needed to restore a stopped or paused application, resulting in the user experiencing a delay to restart the application after the application is called.

To avoid such delay and yet save bandwidth of a bus or memory, a known method proposes to calculate which data is shown on a display or blocked by overlapping data, and chooses to read only the data that can be seen on the display. However, additional resources are needed to identify which data is to be read.

Therefore, there is a need for a new or improved system and method that overcomes or at least ameliorates one or more of the disadvantages discussed above.

### SUMMARY

It is therefore an object to provide a multimedia system and associated method to address the problems discussed above. Particularly, it is an object to provide a multimedia system and associated method that optimizes performance and decreases lag when more than one user application is running concurrently. It is a further object to provide a multimedia system and associated method capable of concurrently running multiple user applications that require high bandwidth of the memory bus.

The invention is defined by the independent claims. To accomplish these and other objects, there is provided, in a first aspect,a vehicle multimedia system for use in a vehicle, the vehicle multimedia system capable of concurrently running more than one user application, the system comprising: means for receiving a user input,
at least one processor, the at least one processor being connected to memory of the vehicle multimedia system via at least one memory bus; and
computer-readable storage media comprising a non-transitory computer-readable storage medium having computer-readable instructions stored thereon,
the vehicle multimedia system being configured to execute the computer-readable instructions by the at least one processor, wherein:
   the computer-readable instructions comprise a display controller configured to determine based on a user input triggering an application or its focus
      - which user application is a foreground user application being displayed; and
      - which user application is a background user application when the system is concurrently running more than one user application;
   wherein the display controller is configured to instruct the at least one processor to scale down dimensions of a window of the background user application and to scale up the dimensions of the window of the background user application when the background user application is called to the foreground,
   wherein the window is the designated area for rendered data to be displayed on the display,
   wherein the window is scaled down to a minimum predefined dimension,
   wherein scaling down the window of the background application decreases the amount of data to be rendered and the decreased amount of data is written to memory of the vehicle multimedia system and read from that memory, thereby saving bandwidth going through the at least one memory bus,
   wherein the background application includes audio and video components and in the presence of the scaled-down window audio playback and video rendering are continued such that synchronisation between an audio stream and a video stream is maintained when the background application is called to the foreground,
   wherein the vehicle multimedia system is configured to concurrently run video playback and at least one other user application.

In a second aspect, there is provided a method of optimizing performance of the vehicle multimedia system according to the invention running more than one user application concurrently, the method comprising:
determining, by the display controller of the vehicle multimedia system, based on a user input triggering an application or its focus, which user application is a foreground user application being displayed and which user application is a background user application; and
instructing, by the display controller, the at least one processor of the vehicle multimedia system to scale down dimensions of a window of the background user application and to scale up the dimensions of the window of the background user application when the background user application is called to the foreground,
wherein the window is the designated area for rendered data to be displayed on the display,
wherein the window is scaled down to a minimum predefined dimension,
wherein scaling down the window of the background application decreases the amount of data to be rendered and decrease an amount of data written to memory of the vehicle multimedia system and read from that memory , thereby saving bandwidth going through the at least one memory bus connecting the at least one processor to memory of the vehicle multimedia system ,
wherein the background application includes audio and video components and in the presence of the scaled-down window audio playback and video rendering are continued such that synchronisation between an audio stream and a video stream is maintained when the background application is called to the foreground,
wherein the concurrently run user applications comprise navigation map guidance and video playback.

Advantageously, applications are prioritized so that the load on the memory bus can be balanced or distributed. Applications that the user is not focused on, such as the background applications, are configured to continuously run but are scaled down to reduce the resources needed to operate such applications.

The display controller is configured to instruct a processor to scale down the window dimensions of the background user application and scale up the window dimensions of the background user application called up for display on the display. In such implementations, the size scaling of a user application may be performed by the processor and is therefore hardware assisted. Thus, size scaling of the user application is advantageously fast, typically a few milliseconds, and no additional calculations or resources are needed to scale down a background user application. Advantageously, the size scaling of the background user application may not add to the calculatory or computing effort typically associated with reducing the resolution or identifying data to be displayed, as in the prior art. When a user requests for a particular user application which has been scaled-down, scaling up of the user application as provided herein is advantageously faster than resuming such user application from a paused or stopped mode.

The system may be configured to execute the computer-readable instructions when bandwidth of bus (es) to the computer-readable storage media is insufficient to concurrently run more than one user application.

The display controller may instruct the processer to scale down the window dimensions of the background user application and scale up the window dimensions of the background user application when bandwidth of bus (es) to computer-readable storage media of the system is insufficient to concurrently run the more than one user applications.

The vehicle multimedia system disclosed herein may be an embedded system. Embedded systems are typically designed to perform one or a few dedicated functions, such as the functions disclosed herein. The embedded system may not be configurable to include functions unrelated or separate to the dedicated functions. An embedded system may read software or computer-readable instructions from a built-in chip, not from a disk like a general-purpose computer system such as a desktop PC. Therefore, system resources of an embedded system to run concurrent user applications are limited. An embedded system may have real-time computing constraints. While the system may be designed to concurrently run more than one user application, system resources of an embedded system may be inadequate to support the running user applications and/or any new actions. Thus, in some embodiments, the present disclosure advantageously provides a solution for embedded systems to optimize their performance. In embodiments of the claimed invention, the at least one scaled down user application running in the background requires synchronization of an audio frame with a rendered frame. In some embodiments, the at least one scaled down user application running in the background is not displayed on the display.

### BRIEF DESCRIPTION OF DRAWINGS

Fig. 1 illustrates a hardware block diagram of an exemplary multimedia system 100.
Fig. 2 illustrates the operations involved in playing a HD video file 102 on a multimedia system 100 according to an embodiment of the present disclosure.
Fig. 3 shows a graph illustrating the total consumption, at different stages, of the bandwidth of the memory buses of multimedia system 100.
Fig. 4 shows a graph illustrating the percentage load of the memory buses corresponding to the bandwidth consumption in Fig. 3.

In the figures, like numerals denote like parts.

### DETAILED DESCRIPTION

Hereinafter, exemplary embodiments of the present invention will be described in detail with reference to the accompanying drawings. The detailed description of this invention will be provided for the purpose of explaining the principles of the invention and its practical application, thereby enabling a person skilled in the art to understand the invention for various exemplary embodiments and with various modifications as are suited to the particular use contemplated. The detailed description is not intended to be exhaustive or to limit the invention to the precise embodiments disclosed.

A multimedia system in a vehicle as defined in claim 1 is provided. The system is capable of concurrently running more than one user application. The system comprises at least one processor; and computer-readable storage media comprising non-transitory computer-readable storage medium having computer-readable instructions stored thereon, the system being configured to execute the computer-readable instructions by the processor. The computer-readable instructions comprise a display controller configured to determine which user application is a foreground application being displayed on a display. When the system is concurrently running more than one user application, the display controller is configured to scale down dimensions of a window bounding at least one user application running in the background. The display controller is further configured to call a background user application to the foreground upon request and scale up the window dimensions of the background user application for display on the display.

A method of optimizing performance of a vehicle multimedia system when more than one user application is running concurrently as defined in claim is also provided. The method comprises determining, by a display controller of the system, which user application is a foreground application being displayed on a display. When more than one user applications are concurrently running on the system, the method further comprises instructing, by the display controller, a processor of the system to scale down dimensions of a window bounding at least one user application running in the background. The method further comprises instructing, by the display controller, the processer to scale up the window dimensions of a background user application for display on the display upon request to call said background user application to the foreground.

Amultimedia system refers to a system for playing different types of digital media, such as text, audio, video, computer graphics, photographs, and animation. In the context of a multimedia system in a vehicle, the most common applications include but are not limited to navigation, audio, radio, playback of auxiliary media, video playback, voice recognition, connection to mobile devices e.g. through Apple CarPlay^{™}, Baidu's CarLife, Android Auto, etc. Other applications that a vehicle multimedia system may have include hands-free voice calling and reading out messages and emails. A vehicle multimedia system may also be referred to as, or may include, the head unit or the infotainment unit. A user of the multimedia system may be the driver or owner or passenger or occupant of the vehicle.

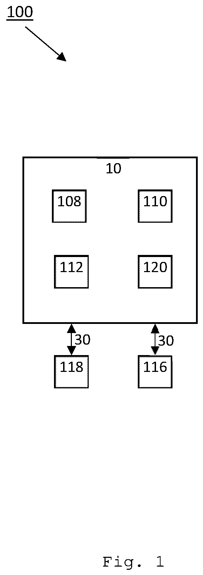

To play different types of media, the multimedia system may be, for example, an embedded system or a general computing device. Fig. 1 illustrates a hardware block diagram of an exemplary multimedia system 100. The multimedia system 100 may comprise one or more processing devices 10, e.g. a system-on-chip or microcontroller, to enable the functions of the multimedia system. The multimedia system 100 typically includes, among other components, a plurality of processors connected to computer-readable storage media or memory modules (generically referenced as 118) by communication buses (generically referenced as 30) . Although memory modules 118 are shown in Fig. 1 as external to the processing device 10, the memory modules may alternatively or additionally be included in the processing device. The processors may include one or more central processing units, such as ARM core, and other processors, such as controllers, 2D and/or 3D graphics processors, video processors, image processors, etc, which are located on a processing device. In Fig. 1, processing device 10 comprises central processing unit 120, a video processor 108, image processor 110 and graphics processor 112, which are each in communication with memory modules 118. While Fig. 1 shows one central processing unit 120, multimedia systems may comprise more than one central processing unit. For example, a multimedia system comprising two central processing units is typically considered a dual core system, while a multimedia system comprising four central processing units is typically considered a quad core system. Typically, central processing unit 120 executes instructions to initialize and run the video processor 108, image processor 110 and/or graphics processor 112. Once the central processing unit 120 instructs the processors 108, 110 and/or 112, the processors 108, 110 and/or 112 execute the instructions independently. That is, the processors 120, 108, 110 and 112 may individually write data to and read data from memory modules such as cache memory, RAM e.g. DDR RAM, and flash memory e.g. NAND flash and NOR flash. The computer-readable storage media or memory modules 118 may comprise transitory and non-transitory computer-readable storage mediums. For example, the central processing unit 120 may read computer-readable instructions from a non-transitory memory module and write data to a transitory memory module in response to the instructions. In response to the instructions, central processing unit 120 may write instructions for the video processor 108, image processor 110 and/or graphics processor 112 to read and execute. One, some or all of the processors may be configured to or involved in rendering contents of each user application or concurrently run user applications, while the memory modules coupled to the processors may be configured to store the rendered contents. The memory modules are also accessed by other peripheral devices such as USB devices, personal mobile devices, DVD or Blu-ray^{™} disc drives, although the drivers of the peripheral devices typically write to the memory modules by direct memory access for better efficiency. Direct memory access may be a potential memory bus master that can cause the memory bus load to increase. The multimedia system also typically includes means for receiving user input, such as a user interface or human-machine interface, rotary knobs, actuators on the steering wheel, mouse, joystick, touch screen display, a microphone, haptic actuator and/or other input mechanisms like voice recognition, gesture recognition, etc. The multimedia system further typically includes a display screen or display to output the multimedia or any information. The input means may be in communication with the display controller which receives the user input from the input means and directs the execution of the user input to, for example, a processor or group of processors, which processes the input to provide an output as requested. Peripheral devices, means for receiving user input, means for outputting multimedia or information, e.g. a display, and other peripherals to the multimedia system are generically referenced as 116.

The multimedia system may comprise software architecture. The software architecture may generally comprise computer-readable instructions stored on a non-transitory computer-readable storage medium to enable the multimedia system to perform its functions. As is known to a person of skill in the art, software or code or instructions may be implemented in various layers of a computing system. The lowest layer of code (physical or hardware layer) transmits and receives raw bits from the hardware to serve the layer above it. The highest layer of code interacts directly with the end user. The computer-readable instructions may encompass code traversing several layers. The software architecture may include, but is not limited to, an operating system of the multimedia system, application software for each user application, and other software that may be needed to interface between the operating system and application software or perform other functions required by the multimedia system.

User applications for a multimedia system are software programs or a set of instructions that work with the system's hardware components to allow the user to use and experience multimedia. The operations involved in running a multimedia application may include audio encoding and decoding, video encoding and decoding, content rendering, audio volume changing, colour space conversion, overlaying, among many other operations.

The display controller may be part of the user application software, typically as part of one of the top two layers of code or traversing the top two layers of code. The display controller may be a protocol specifying communication between a display server controlling the display of rendered contents and its clients, e.g. the user application. Alternatively, the display controller may comprise a rendering module to control the rendering of data and the display of the rendered data. The display controller may include the functions of a display server and/or functions of combining surfaces from each user application to create a graphical user interface that is output to the display. The display controller may control the display of contents, transmit communications between the processor(s) and the input means, and/or output images to a display.

User applications can be manipulated by a user action or user input, for example the user can start an application, switch multimedia source, e.g. switch to video source or an audio source, switch application surface, or manipulate the application surface, e.g. scrolling to display another map section or zooming a map section in or out. These operations and actions contribute to the bandwidth requirements on the memory bus(es).

When the user provides an input, one or more processors are instructed to execute the action. These processor(s) may take control of the bus to the memory module, thereby becoming the memory bus masters. For example, when the user provides an input to play a high definition video, the operations involved in playing the video may include reading the media file, decompressing or decoding the compressed video frames from the file, decoding the audio frames, rendering each video frame into a form suitable for display, converting each rendered frame into a format suitable for display on the display screen (colour space conversion), synchronizing the audio frame with each rendered frame, scaling each rendered frame into a size suitable for display on the display screen, writing each rendered frame to a dedicated surface or memory block, overlaying multiple dedicated surfaces if necessary, wherein each dedicated surface represents a user application e.g. overlaying a HMI animation onto a video frame, writing each frame to a frame buffer, and displaying the frame on the HD display screen. These operations involve the video processing unit (VPU), the graphics processing unit (GPU) and the image processing unit (IPU), and therefore these processors become the memory bus masters. In another example, rendering and displaying a navigation map involves the GPU, ARM core and IPU as memory bus masters. Accordingly, any user action like selecting video playback, requesting navigation route guidance, audio source changing, volume changing and screen switching requires one or a host of bus masters.

The bus or buses to the memory, i.e. the memory bus, should have sufficient bandwidth to transmit data to and from the memory, even data for high bandwidth use cases or user applications or resource-intensive operations, e.g. user actions. However, in instances where the hardware, e.g. the memory bus, is inadequate to support increasingly sophisticated applications and increasing application requirements, the disclosed invention aims to mitigate such instances where the memory bus does not have sufficient bandwidth to concurrently execute all actions and any new actions, especially when the system is multi-tasking and running multiple user applications concurrently. In general, the capability of the bus determines how quickly components of the computer system can communicate with each other. Thus, the speed of the connection to the memory, e.g. RAM, directly controls how fast the computer system can access instructions and data.

The disclosed invention is particularly advantageous in scenarios where the user can only focus on one use case or user application at a time. Such scenarios may happen when there is only one display screen, or when there is no split-screen function on a display screen.

In multi-tasking scenarios, for example when a second user application is triggered, e.g. by user input, the display controller identifies the second user application as the foreground application. At this time, the first user application is not the focus of the user and/or has been fully or partially obscured when the second user application is called onto the display. It has been discovered that rendering of content for display on a full display screen utilizes a significant amount of bandwidth, as compared to other operations such as audio/video decoding, colour space conversion and overlaying. This is because each pixel of a display requires a certain amount of data, and since a typical display has thousands of pixels, the amount of data required to render content for a full display screen becomes very large. Hence, scaling down or minimizing the window of the background application, so that the rendered content is suitable not for display on the whole display screen but a scaled-down portion of the display screen, decreases the amount of data to be rendered. Therefore, a decreased amount of data is required to be written to memory and read from memory, thereby saving bandwidth going through the memory bus.

Furthermore, where the background application requires content rendering as well as synchronization of other components with the rendered content, the presence of a scaled down window indicates to the processor(s) to continue running the application, but at reduced bandwidth, so that the components continue to be synchronized thereby avoiding any re-synchronization delays when called to the foreground. Such components are dependent on the rendered content and therefore synchronization of such components and the rendered content is required. For example, in scenarios where the background application includes audio and video components, the presence of the window, albeit a scaled-down window, enables the continuation of the audio and video output, thereby negating the need to re-synchronize the audio stream with the video stream when the background application is called to the foreground. Users can be sensitive to any mis-synchronization of audio output and its associated video output, thus ensuring such synchronization is advantageous in a user perspective.

The at least one application selected to be scaled down when in the background and scaled up when called to the foreground is one that require content rendering and synchronization of other components with the rendered content. The at least one scaled down user application running in the background requires synchronization of an audio frame with a rendered frame. Such applications may be identified when designing the multimedia system and programmed to be scaled down or up when in the background or foreground respectively. Alternatively, the disclosed invention may comprise identifying, e.g. by the display controller, applications that require content rendering and/or synchronization of components with the rendered content, before scaling down the dimensions of the window bounding such applications when such applications are relegated to the background.

According to examples not part of the claimed invention, in scenarios where the background application may not encounter problems of re-synchronizing components such as audio and video streams or the re-synchronization may not take up a significant amount of bandwidth or the re-synchronization may not have undesirable mis-synchronization side effects, the rendering activities to the scaled-down background application window may be stopped or alternatively the background application may be stopped. For example, a navigation application that does not require map caching, route calculation, visual guidance, voice guidance, etc to be synchronized with the rendered map content may be stopped when in the background.

In scenarios where an application which produces audio is relegated to the background, the audio of the background application may be attenuated so that the user can focus on the foreground application. Alternatively, the audio of the background application may be maintained if the foreground application does not produce audio. In scenarios where the foreground and background applications produce audio, the volume of the audio output from the background application may be lowered relative to that from the foreground application. In such scenarios, the system may comprise an audio manager configured to attenuate or otherwise control any audio output of each background application.

In examples not part of the claimed invention, there may be one or more background applications and at least one, some or all of these may be scaled down to reduce the resources required to run them. Thus, the background application(s) advantageously contribute a smaller amount of data that is needed to be transmitted to and from the memory, thereby freeing up bandwidth on the memory bus.

The surface or area designated for the rendered data to be displayed on the display is termed a "window". The window surrounds or bounds the data of the user application that is output. The window may occupy the entire display screen or part of the display screen. The window of the background application is scaled down to a minimum predefined dimension so that the background application requires less data to run. Advantageously, the user may not experience lag if further user actions are made, since the memory resources of the multimedia system are optimized and not running at 100%. The display controller may make use of a hardware or a processor, for example an image processing unit, to scale down the window dimensions of the background user application to a predefined dimension. As the scaling down of the background user application may advantageously be executed by hardware, i.e. is hardware assisted, the step of scaling down may not add to the calculatory or computing effort associated with reducing the resolution or identifying data to be displayed, as in the prior art. Hardware-assisted scaling means that once the processor obtains the data for scaling from the memory, subsequent steps to execute the scaling are done in the processor itself. No resources are spent by the system's central processing unit or ARM core for scaling, thus no access to the system's memory is required. Therefore, hardware-assisted scaling is not constrained by the memory bus or other hardware. Once the scaled-down window is produced in the processor, the scaled-down window is then written to the memory through the memory bus.

The predefined dimension may be a minimum that is hardware-defined, system-defined or application-defined. For example, the minimum predefined dimension may be a window size specified by an image processor's specification. The window may be scaled down to a minimum dimension predefined by the processor. In an embodiment, the window of the background application may be scaled down to a minimum predefined dimension of 1 pixel by 1 pixel.

The window that is scaled down may be hidden behind the foreground application and not shown on the display screen. The scaled down window of the background application may be configured not to be displayed on the display screen or output to the display. The scaled down background window may not be displayed on the display. The display controller may be configured to process the operations of the background application but configured not to display or output to the display. For example, a scaled down window of 1 pixel by 1 pixel may appear as a dot and therefore, such window may be configured not to be displayed on the display. Alternatively, the window that is scaled down may be shown as a thumbnail on the display screen. In such embodiments, the display controller may be configured to construct dedicated surfaces including the scaled down window and the window bounding the foreground application. The display controller may overlay the various dedicated surfaces to create an interface that is displayed or output to the display. In such embodiments, the thumbnail may have its frame rate attenuated to further decrease its bandwidth contribution.

When the user triggers the first user application to be brought back to the foreground, back into the user's focus, the display controller instructs, e.g. a processor, to scale up the window dimensions of the first user application for display on the display. Advantageously, in such embodiments, the scaling up of the background window is hardware assisted, e.g. undertaken by a processor, and therefore requires minimal time and memory resources to scale up. Particularly, the time needed to scale up the background window may advantageously be lesser than the time needed to restore a stopped or paused application. In embodiments, the time needed to scale up the background window may be less than half, less than a third, or even less than a fifth of the time needed to restore a stopped or paused application. In an embodiment, the processor configured to undertake scaling of the window is an image processing unit.

In multimedia entertainment systems, performance tuning is imperative to ensure good user experience. With ever bigger screens and playback with ever increasing resolution, the bus (es) to and from the memory consumes ever increasing bandwidth, thereby facing severe bandwidth challenges when the system has to support multiple applications running concurrently. To ensure seamless transition between screen changes, the time delay of the transition is critical to meet end user expectation. The disclosed invention solves both problems of slow response of the system due to high load on the memory bus, as well as reducing the time delay for a background application to be resumed.

In automotive multimedia systems, such as those disclosed herein, it is a legal requirement in some countries to stop video applications such as video playback and/or the associated audio when the vehicle is moving. Re-synchronization of a video frame with its audio frame when a stopped or paused video application is restarted is therefore a problem which is solved by the present disclosure. In particular, the scaled down background window enables a video application to continue running, thereby negating the need for re-synchronization. As the background window may not be displayed, legal requirements may be met, while system requirements are also met since the continued operation of the background video application is at reduced bandwidth.

While the invention is suitable for any applications concurrently running on a multimedia system, the disclosed invention advantageously assists multimedia systems configured to concurrently run video playback, particularly high-definition video playback, and at least one other user application. The invention will now be illustrated in respect of this embodiment. A conventional way of saving the bandwidth used for reading and writing HD video data to memory, is to continue the audio decoding and playback but stop the HD video rendering when the video source is relegated to the background, and navigation map guidance is brought to the foreground. This is because video rendering takes up a large chunk of bandwidth, while audio and video decoding activities as well as audio playback take up minimal bandwidth. However, when the user switches back to the video source, the media software component or application needs to synchronize the stopped decoded video frame with the ongoing audio playback before rendering to the surface display. The time taken for synchronisation and video restoration can typically be 1 second or longer, depending on the system resource consumption status. The audio and video playback may even be mis-synchronized. In the user's perspective, a blank screen or a frozen frame is seen during this time while waiting for the video playback to be resumed and displayed.

To avoid the delay required for re-synchronization, the rendering of the HD video is continued but the video playback display window is reduced to a 1 x 1 pixel window to reduce consumption of memory bus bandwidth resulting from the rendering of the HD video to a standard sized display. This is an advantage because in instances where the background application is not shown on the display screen, the user does not see the HD video playing in the background. The resizing of the HD video playback display window size uses the image processing unit and this is also an advantage since it is a hardware-assisted resizing. As a result, the system is not deprived from memory access and is able to run and react responsively.

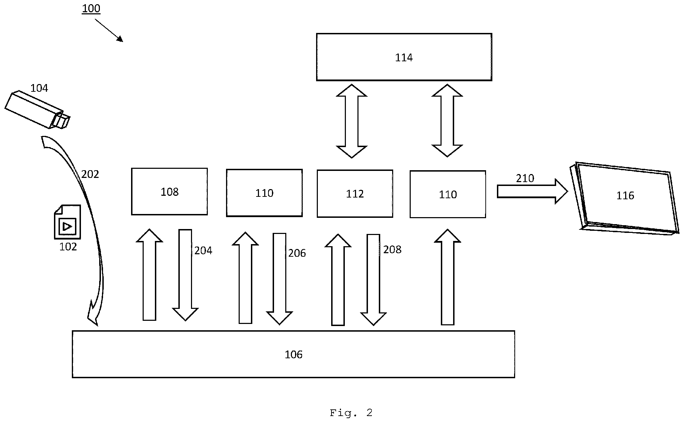

Fig. 2 illustrates the operations involved in playing a HD video 102 from a USB storage drive 104 plugged into a multimedia system 100 according to an embodiment of the present disclosure. The video file 102 is copied or written to DDR memory 106 by direct memory access, as shown by arrow 202. The CPU (not shown in Fig. 2) reads the file 102 from DDR memory 106 and instructs VPU 108 to retrieve the compressed video data from DDR memory 106 and decode the video data using the VPU' s video codec. The compressed audio data may be decoded in this way or by software decoding. The decoded video/audio data is written to DDR memory 106 through memory bus 204. The decoded video data may not be in a format suitable for display on display 116, so IPU 110 is instructed to conduct colour space conversion to convert the decoded data into a suitable format for display. The IPU 110 may also be instructed to scale the decoded data into a size suitable for display. Synchronization of the decoded audio and video data may occur at this stage, either by means of software or hardware. The IPU 110 then writes the converted and/or scaled video data to DDR memory 106 through memory bus 206.

At this stage, the video data is typically still in fragments. Thus, GPU 112 is instructed to render the video data and produce video frames suitable for display on display 116 or on a scaled-down window if the HD video is playing in the background. The rendered frames are sent through memory bus 208 to be written to a memory block in the DDR memory 106 that is allocated to the HD video application, termed the application's dedicated surface. It has been discovered that the reading and writing through memory buses 204 and 206 do not take up much bandwidth, while reading and writing through memory bus 208 take up much bandwidth when producing video frames suitable for display on display 116. Therefore, the amount of data going through the memory bus 208 may advantageously be decreased by scaling down the window bounding the HD video if it is in the background. Memory buses 204, 206, 208 may be different buses to the DDR memory 106, in which case the total bandwidth and bus load are a total of these memory buses. Memory buses 204, 206, 208 may be a single bus or different buses eventually forming a single bus to the DDR memory 106. Here, memory bus may refer to an internal bus, i.e. connections within a chip or component or unit, or an external bus, i.e. connections between chips, components or units.

Rendering by the GPU 112 may be controlled by display controller 114, which is above the physical layer. Display controller 114 is also responsible for overlaying dedicated surfaces to output a final image or frame for display on display 116, typically by use of IPU 110, then the final image or frame is transmitted to display 116 through a display port 210, e.g. LVDS, HDMI, MIPI. That is, display controller 114 instructs IPU 110 to retrieve the various dedicated surfaces for overlaying, from DDR memory 106 before IPU 110 transmits the final image or frame to display 116.

By virtue of its responsibilities of controlling the final image or frame that is output to display 116, the display controller 114 is able to determine the user application whose frame is being displayed on the display 116, i.e. the foreground application, and which application(s) are the background applications. By virtue of its responsibilities of controlling the rendering or creating of each dedicated surface, controller 114 is also capable of dictating the size of each dedicated surface. Therefore, for one, some or all background applications, display controller 114 is capable of specifying the size of the window bounding the background application, e.g. 1 x 1 pixel, and instruct GPU 112 to render video frames suitable for the scaled-down background window. Display controller 114 may choose to output or not to output the window of the background HD video to display 116. If the scaled-down background window is output to display 116, e.g. as a thumbnail, the display controller 114 instructs the IPU 110 to create the final image or frame to be output. The IPU 110 in turn transmits the final image or frame to the display 116 through display port 210.

A common HD video display size uses 720 lines with 1280 pixels per line (1280 x 720). Each colour pixel typically uses 32 bits per pixel, i.e. 4 bytes, and the refresh rate of a typical HD display is 30 frames per second. Accordingly, for one read cycle and one write cycle, the bandwidth required to render 30 video frames in one second to such a HD video display (represented in Fig. 2 by display 116) is: 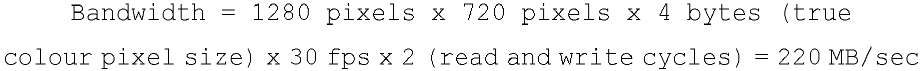 Bandwidth = 1280 pixels x 720 pixels x 4 bytes (true colour pixel size) x 30 fps x 2 (read and write cycles) = 220 MB/sec

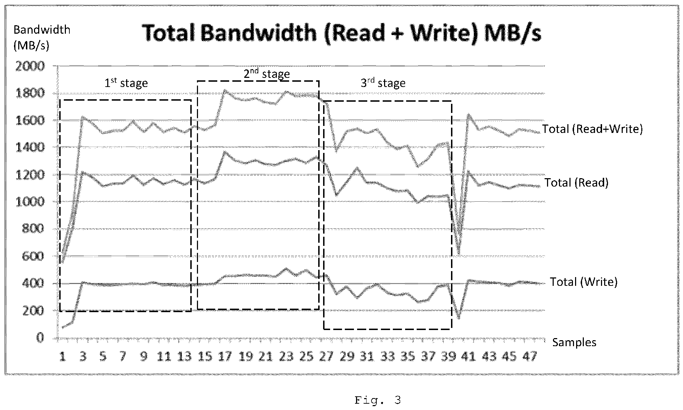

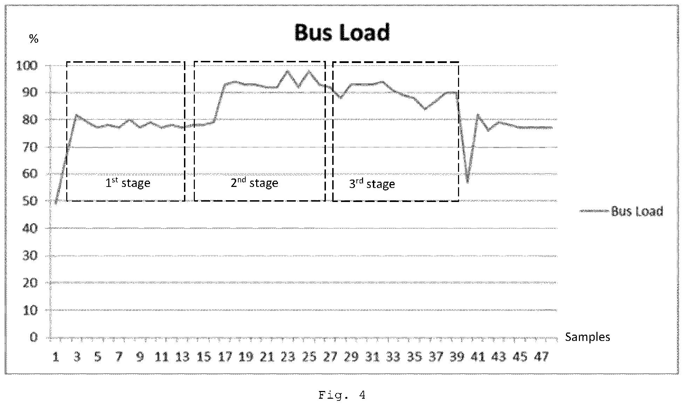

Fig. 3 shows a graph illustrating the total consumption, at different stages, of the memory bus bandwidth of system 100 comprising 2D and 3D graphics processing units, a video processing unit, a digital signal processor, and an ARM core. Fig. 4 shows a graph illustrating the memory bus load corresponding to the bandwidth consumption. In the first stage, HD video is playing in the foreground and each bandwidth sampled shows an average of about 80% bus load. The second stage shows a rise in sampled bandwidth due to concurrent running of navigation map guidance and the associated rendering activities in the foreground, while the HD video is playing in the background at its standard, unchanged window size. The third stage shows a drop in the sampled bandwidth when the background HD video window is resized from 1280 pixels x 720 pixels to 1 x 1 pixel. The bandwidth required for such a 1 x 1 pixel background window is: 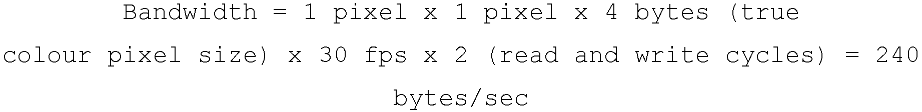 Bandwidth = 1 pixel x 1 pixel x 4 bytes (true colour pixel size) x 30 fps x 2 (read and write cycles) = 240 bytes/sec

In the third stage, it was observed that the bus load did not reduce immediately because the system was overloaded in the second stage before the resize and had therefore built up ARM core processing backlog. After the resize, the ARM core had to catch up on the backlog and hence the busload did not reduce immediately. The drop in bandwidth is mainly due to saving of bandwidth when the 2D graphics processing unit is the memory bus master. This is because the 2D graphics processing unit is primarily responsible for video rendering. As can be seen from the third stage in Figs. 3 and 4, there is a saving of approximately 200 MB/s of read bandwidth and 100 MB/s of write bandwidth. The total memory bus bandwidth dropped from 1800 MB/s to 1400 MB/s when the HD Video window size is minimized, while the overall memory bus load dropped by 15%.

If the third stage was allowed to continue longer, the bus load would have reduced further until the ARM core backlog was cleared, thereby contributing less to the percentage bus load. Importantly, although the busload was relatively high in the third stage of the figures, the system was relatively more responsive because the ARM core now had more access to the memory bus and was able to execute instructions in time.

When the HD video is called to the foreground, the restoration of the HD video window size from 1 pixel x 1 pixel back to 1280 pixels x 720 pixels takes only a few milliseconds. Furthermore, there is no need for any re-synchronization of the video frame with the audio playback because the video and audio are running continuously in the 1 x 1 pixel background window. The step that was not done when the HD video was in the background, i.e. outputting the HD video to display 116, is now resumed. Accordingly, the bandwidth of the memory bus can be optimized, thereby preventing the multimedia system's performance from being degraded. Further, the operations of decoding, colour space converting, synchronizing audio and video frames, etc, need not be stopped and resumed, thereby preventing any lag.

## Claims

1. A vehicle multimedia system (100) for use in a vehicle, the vehicle multimedia system (100) capable of concurrently running more than one user application, the system (100) comprising:
means for receiving a user input,
at least one processor (108, 110, 112), the at least one processor (108, 110, 112) being connected to memory of the vehicle multimedia system via at least one memory bus; and
computer-readable storage media comprising a non-transitory computer-readable storage medium having computer-readable instructions stored thereon,
the vehicle multimedia system (100) being configured to execute the computer-readable instructions by the at least one processor (108, 110, 112),
wherein:
the computer-readable instructions comprise a display controller (114) configured to determine based on a user input triggering an application or its focus
• which user application is a foreground user application being displayed; and
• which user application is a background user application when the vehicle multimedia system (100) is concurrently running more than one user application;
wherein the display controller (114) is configured to instruct the at least one processor (108, 110, 112) to scale down dimensions of a window of the background user application and to scale up the dimensions of the window of the background user application when the background user application is called to the foreground,
wherein the window is the designated area for rendered data to be displayed on the display,
wherein the window is scaled down to a minimum predefined dimension,
wherein scaling down the window of the background application decreases the amount of data to be rendered and the decreased amount of data is written to memory of the vehicle multimedia system and read from that memory, thereby saving bandwidth going through the at least one memory bus,
wherein the background application includes audio and video components and in the presence of the scaled-down window audio playback and video rendering are continued such that synchronisation between an audio stream and a video stream is maintained when the background application is called to the foreground,
wherein the vehicle multimedia system (100) is configured to concurrently run video playback and at least one other user application.

2. A method of optimizing performance of a vehicle multimedia system (100) as claimed in claim 1 running more than one user application concurrently, the method comprising:
determining, by the display controller (114) of the vehicle multimedia system (100), based on a user input triggering an application or its focus, which user application is a foreground user application being displayed and which user application is a background user application; and instructing, by the display controller (114), the at least one processor (108, 110, 112) of the vehicle multimedia system (100) to scale down dimensions of a window of the background user application and to scale up the dimensions of the window of the background user application when the background user application is called to the foreground,
wherein the window is the designated area for rendered data to be displayed on the display,
wherein the window is scaled down to a minimum predefined dimension,
wherein scaling down the window of the background application decreases the amount of data to be rendered and decrease an amount of data written to memory of the vehicle multimedia system and read from that memory , thereby saving bandwidth going through the at least one memory bus connecting the at least one processor to memory of the vehicle multimedia system ,
wherein the background application includes audio and video components and in the presence of the scaled-down window audio playback and video rendering are continued such that synchronisation between an audio stream and a video stream is maintained when the background application is called to the foreground,
wherein the concurrently run user applications comprise navigation map guidance and video playback.

## Patentansprüche

1. Fahrzeug-Multimediasystem (100) zur Verwendung in einem Fahrzeug, wobei das Fahrzeug-Multimediasystem (100) in der Lage ist, gleichzeitig mehr als eine Benutzeranwendung auszuführen, das System (100) umfassend:
Mittel zum Empfangen einer Benutzereingabe,
mindestens einen Prozessor (108, 110, 112), wobei der mindestens eine Prozessor (108, 110, 112) über mindestens einen Speicherbus mit dem Speicher des Fahrzeug-Multimediasystems verbunden ist, und
computerlesbare Speichermedien, umfassend ein nicht-flüchtiges computerlesbares Speichermedium, das darauf gespeicherte computerlesbare Anweisungen aufweist,
wobei das Fahrzeug-Multimediasystem (100) dazu konfiguriert ist, die computerlesbaren Anweisungen durch den mindestens einen Prozessor (108, 110, 112) auszuführen,
wobei:
die computerlesbaren Anweisungen eine Anzeigesteuerung (114) umfassen, die dazu konfiguriert ist, basierend auf einer Benutzereingabe, die eine Anwendung oder deren Fokus auslöst, zu bestimmen
• welche Benutzeranwendung eine Vordergrund-Benutzeranwendung ist, die angezeigt wird; und
• welche Benutzeranwendung eine Hintergrund-Benutzeranwendung ist, wenn das Fahrzeug-Multimediasystem (100) gleichzeitig mehr als eine Benutzeranwendung ausführt;
wobei die Anzeigesteuerung (114) dazu konfiguriert ist, den mindestens einen Prozessor (108, 110, 112) anzuweisen, die Abmessungen eines Fensters der Hintergrund-Benutzeranwendung herunterzuskalieren und die Abmessungen des Fensters der Hintergrund-Benutzeranwendung hochzuskalieren, wenn die Hintergrund-Benutzeranwendung in den Vordergrund aufgerufen wird,
wobei das Fenster der festgelegte Bereich für gerenderte Daten ist, die auf der Anzeige angezeigt werden sollen,
wobei das Fenster auf eine vorgegebene Mindestabmessung herunterskaliert wird,
wobei das Herunterskalieren des Fensters der Hintergrundanwendung die Menge der zu rendernden Daten verringert und die verringerte Datenmenge in den Speicher des Fahrzeug-Multimediasystems geschrieben wird und aus diesem Speicher gelesen wird, wodurch Bandbreite eingespart wird, die den mindestens einen Speicherbus durchläuft,
wobei die Hintergrundanwendung Audio- und Videokomponenten beinhaltet und
bei Vorliegen des herunterskalierten Fensters die Audiowiedergabe und das Videorendern derart fortgesetzt werden, dass die Synchronisierung zwischen einem Audiostream und einem Videostream aufrechterhalten wird, wenn die Hintergrundanwendung in den Vordergrund aufgerufen wird,
wobei das Fahrzeug-Multimediasystem (100) dazu konfiguriert ist, gleichzeitig eine Videowiedergabe und mindestens eine andere Benutzeranwendung auszuführen.

2. Verfahren zum Optimieren der Leistung eines Fahrzeug-Multimediasystems (100) nach Anspruch 1, das mehr als eine Benutzeranwendung gleichzeitig ausführt, das Verfahren umfassend:
Bestimmen, durch die Anzeigesteuerung (114) des Fahrzeug-Multimediasystems (100), basierend auf einer Benutzereingabe, die eine Anwendung oder deren Fokus auslöst, welche Benutzeranwendung eine Vordergrund-Benutzeranwendung ist, die angezeigt wird, und welche Benutzeranwendung eine Hintergrund-Benutzeranwendung ist; und
Anweisen, durch die Anzeigesteuerung (114), des mindestens einen Prozessors (108, 110, 112) des Fahrzeug-Multimediasystems (100), die Abmessungen eines Fensters der Hintergrund-Benutzeranwendung herunterzuskalieren und die Abmessungen des Fensters der Hintergrund-Benutzeranwendung hochzuskalieren, wenn die Hintergrund-Benutzeranwendung in den Vordergrund aufgerufen wird,
wobei das Fenster der festgelegte Bereich für gerenderte Daten ist, die auf der Anzeige angezeigt werden sollen,
wobei das Fenster auf eine vorgegebene Mindestabmessung herunterskaliert wird,
wobei das Herunterskalieren des Fensters der Hintergrundanwendung die Menge der zu rendernden Daten verringert und eine Datenmenge, die in den Speicher des Fahrzeug-Multimediasystems geschrieben wird, verringert und aus diesem Speicher gelesen wird, wodurch Bandbreite eingespart wird, die den mindestens einen Speicherbus durchläuft, der den mindestens einen Prozessor mit dem Speicher des Fahrzeug-Multimediasystems verbindet,
wobei die Hintergrundanwendung Audio- und Videokomponenten beinhaltet und
bei Vorliegen des herunterskalierten Fensters die Audiowiedergabe und das Videorendern derart fortgesetzt werden, dass die Synchronisierung zwischen einem Audiostream und einem Videostream aufrechterhalten wird, wenn die Hintergrundanwendung in den Vordergrund aufgerufen wird,
wobei die gleichzeitig ausgeführten Benutzeranwendungen Navigationskartenführung und Videowiedergabe umfassen.

## Revendications

1. Système multimédia de véhicule (100) pour une utilisation dans un véhicule, le système multimédia de véhicule (100) pouvant exécuter simultanément plus d'une application utilisateur, le système (100) comprenant :
des moyens pour recevoir une entrée utilisateur,
au moins un processeur (108, 110, 112), l'au moins un processeur (108, 110, 112) étant connecté à une mémoire du système multimédia de véhicule via au moins un bus mémoire ; et
un support de stockage lisible par ordinateur comprenant un support de stockage non transitoire lisible par ordinateur sur lequel sont stockées des instructions lisibles par ordinateur,
le système multimédia de véhicule (100) étant configuré pour exécuter les instructions lisibles par ordinateur par l'au moins un processeur (108, 110, 112),
dans lequel :
les instructions lisibles par ordinateur comprennent un dispositif de commande d'affichage (114) configuré pour déterminer sur la base d'une entrée utilisateur déclenchant une application ou son focus
• quelle application utilisateur est une application utilisateur de premier plan affichée ; et
• quelle application utilisateur est une application utilisateur d'arrière-plan lorsque le système multimédia de véhicule (100) exécute simultanément plusieurs applications utilisateur ;
dans lequel le dispositif de commande d'affichage (114) est configuré pour ordonner à l'au moins un processeur (108, 110, 112) de réduire les dimensions d'une fenêtre de l'application utilisateur d'arrière-plan et d'augmenter les dimensions de la fenêtre de l'application utilisateur d'arrière-plan lorsque l'application utilisateur d'arrière-plan est appelée au premier plan,
dans lequel la fenêtre est la zone désignée pour les données rendues à afficher sur l'affichage,
dans lequel la fenêtre est réduite à une dimension minimale prédéfinie,
dans lequel la réduction de la fenêtre de l'application d'arrière-plan diminue la quantité de données à rendre et la quantité réduite de données est écrite dans la mémoire du système multimédia de véhicule et lue à partir de cette mémoire, ce qui permet ainsi d'économiser de la bande passante transitant par l'au moins un bus mémoire,
dans lequel l'application d'arrière-plan comporte des composants audio et vidéo et,
en présence de la fenêtre réduite, la lecture audio et le rendu vidéo se poursuivent de sorte qu'une synchronisation entre un flux audio et un flux vidéo est maintenue lorsque l'application d'arrière-plan est appelée au premier plan,
dans lequel le système multimédia de véhicule (100) est configuré pour exécuter simultanément une lecture vidéo et au moins une autre application utilisateur.

2. Procédé d'optimisation des performances d'un système multimédia de véhicule (100) selon la revendication 1 exécutant simultanément plusieurs applications utilisateur, le procédé comprenant :
le fait de déterminer, par le dispositif de commande d'affichage (114) du système multimédia de véhicule (100), sur la base d'une entrée utilisateur déclenchant une application ou son focus, quelle application utilisateur est une application utilisateur de premier plan affichée et quelle application utilisateur est une application utilisateur d'arrière-plan ; et
le fait d'ordonner, par le dispositif de commande d'affichage (114), à l'au moins un processeur (108, 110, 112) du système multimédia de véhicule (100) de réduire les dimensions d'une fenêtre de l'application utilisateur d'arrière-plan et d'augmenter les dimensions de la fenêtre de l'application utilisateur d'arrière-plan lorsque l'application utilisateur d'arrière-plan est appelée au premier plan,
dans lequel la fenêtre est la zone désignée pour les données rendues à afficher sur l'affichage,
dans lequel la fenêtre est réduite à une dimension minimale prédéfinie,
dans lequel la réduction de la fenêtre de l'application d'arrière-plan diminue la quantité de données à rendre et diminue une quantité de données écrite dans la mémoire du système multimédia de véhicule et lue à partir de cette mémoire, ce qui permet ainsi d'économiser de la bande passante transitant par l'au moins un bus mémoire connectant l'au moins un processeur à la mémoire du système multimédia de véhicule,
dans lequel l'application d'arrière-plan comporte des composants audio et vidéo et,
en présence de la fenêtre réduite, la lecture audio et le rendu vidéo se poursuivent de sorte qu'une synchronisation entre un flux audio et un flux vidéo est maintenue lorsque l'application d'arrière-plan est appelée au premier plan,
dans lequel les applications utilisateur exécutées simultanément comprennent un guidage par carte de navigation et une lecture vidéo.
